# EUROPÄISCHE PATENTSCHRIFT

(11) **EP 1 882 896 B1**
(45) Veröffentlichungstag und Bekanntmachung des Hinweises auf die Patenterteilung: **17.12.2014**
(21) Anmeldenummer: 07005091.9
(22) Anmeldetag: 13.03.2007
(51) Int. Cl.: G01B 11/25, G01M 11/00, G01N 21/958

(54) **Dreidimensionale Vermessung der Form und der lokalen Oberflächennormalen von spiegelnden Objekten**
Three-dimensional measurement of the shape and of the local surface perpendicular of specular objects
Mesure en trois dimensions d'une forme et de la normale de surface locale d'objets miroitants

(30) Priorität: 24.07.2006 US 832866 P
(43) Veröffentlichungstag der Anmeldung: 30.01.2008
(73) Patentinhaber: 3D-Shape GmbH, 91052 Erlangen (DE)
(72) Erfinder: Lampalzer, Ralf Dr., 91058 Erlangen (DE)
(74) Vertreter: Leonhard, Frank Reimund

(56) Entgegenhaltungen:
- WO-A-2005/119172
- DE-A1- 10 014 964
- DE-A1- 19 944 354
- JP-A- 2005 134 362
- US-A- 5 413 941
- HISATOSHI FUJIWARA, YUKITOSHI OTANI, TORU YOSHIZAWA: "Flatness measurement by UV moiré" OPTOMECHATRONIC SYSTEMS II, PROCEEDINGS OF SPIE, Bd. 4564, Oktober 2001 (2001-10), Seiten 323-330, XP002455393

## Beschreibung

In vielen Anwendungen werden 3D-Sensoren zur dreidimensionalen Erfassung der Form eingesetzt. Auch die Vermessung spiegelnder Oberflächen gelingt mit optischen Sensoren. Oberflächen von Brillengläsern oder Autoscheiben, aber auch lackierte Oberflächen stehen hierfür als Beispiel.

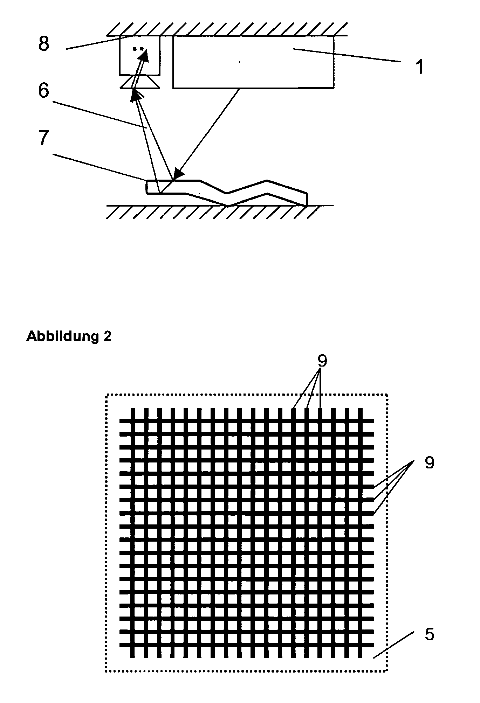

Die optische Vermessung spiegelnder Freiformflächen erfolgt durch Verfahren, die als "Deflektometrie" bezeichnet werden nach Abbildung 1. Eine Beobachtungseinrichtung mit einer oder mehreren Kameras 8 ist auf die spiegelnde Oberfläche des Messobjekts 7 gerichtet und beobachten dort ein Spiegelbild einer ausgedehnten Beleuchtungseinrichtung 1, bei der es sich in der Regel um einen strukturierten Schirm, eine strukturiert beleuchtete Mattscheibe oder einen Fernseher oder Monitor, der Strukturen darstellt, handelt. Die spiegelnde Oberfläche selbst ist nicht sichtbar. Durch Auswertung der Strukturen des Spiegelbildes kann man Rückschlüsse auf die lokale Neigung der spiegelnden Oberfläche und damit auf ihre Form ziehen.

Die im Folgenden angegebenen Fundstellen ([AutorJahr]) finden sich im Abschnitt "Referenzen" am Ende der Beschreibung im Vollzitat.

Konkret zu nennen sind die Rasterreflexionsverfahren [Ritter83], [Pérard97] und [Kammel03]. Bei diesen Verfahren werden Muster auf einen Schirm projiziert.

[Pérard97] schlägt vor, als Schirm einen Fernseher oder Monitor zu verwenden. Man bestimmt die Verzerrung meist durch eine Serie von verschobenen Mustern.

Wenn man als Muster ein Sinusmuster verwendet, so [Häusler 99], kann das Phasenshiftverfahren zur Auswertung der Bilder benutzt werden. Die erforderlichen Strukturen auf der Beleuchtungseinrichtung sind dann umschaltbar waagrechte oder senkrechte Streifen. Das Rückverfolgen eines nur im Rechenmodell einzeln vorhandenen deflektierten Strahls 7 am Schnittpunkt einer senkrechten mit einer waagrechten Linie geschieht nach den Gesetzen der Spiegelung mit Hilfe von vorher erzeugten Kalibrierdaten. Die Auswertung geschieht in einer geeigneten Rechen- und Auswerteeinheit.

Eine solche Auswertung ergibt als Messgröße eine Kombination von lokaler Oberflächennormale und lokaler Höhe der spiegelnden Oberfläche.

Für eine Absolutmessung sind zusätzliche Maßnahmen notwendig. In [Petz03] wird dazu der Schirm verschoben. In [Knauer05] werden zur Lösung des Problems zwei Kameras verwendet, die je eine verschiedene Kombination aus Höhe und Oberflächennormalen messen.

Die deflektometrisch arbeitenden optischen Sensoren sind üblicherweise nach photogrammetrischen Verfahren kalibriert. Bei der Kalibration wird während der Kalibration der Ort der Kameras, die inneren Parameter der Kameras und ihrer Objektive, die Ebene des Schirms, und der Ort der darauf projizierten Strukturen bestimmt. Bei Kenntnis aller dieser Größen ist das für die Deflektometrie typische Berechnen der Verläufe der Lichtstrahlen 6 möglich, von der Mattscheibe zum unbekannten Objekt und danach von diesem zur Kamera vgl. Abbildung 1.

Ein Messsystem, welches nach diesem Verfahren arbeitet wird zur Vermessung von asphärischen Linsen, insbesondere von Brillengläsern, auf dem Markt bereits angeboten, vgl. [3DS06], als Kopie im Prüfungsverfahren am Anmeldetag eingereicht. Hierfür kommt in einer Ausführung ein Schirm aus Kunststoff zum Einsatz, der von einem Videoprojektor beleuchtet wird, in einer anderen Ausführung ein Flachbild-Fernsehschirm.

Bei der Vermessung von spiegelnden Messobjekten, die für sichtbares Licht durchlässig sind, ergibt sich das Problem des "Rückseitenreflexes". Licht dringt in das Messobjekt ein und wird an weiter innen liegenden optischen Grenzflächen reflektiert. Dieses reflektierte Licht ist nicht erwünscht, es addiert sich zu dem an der Oberfläche reflektierten Licht und verfälscht das Messergebnis. Normalerweise ist die Rückseite einer zu vermessenden Linse diese störende Grenzfläche.

[3DS06] löst dieses Problem dadurch, dass
- die Oberfläche der Rückseite der zu vermessenden Objekte durch Glasperlenstrahlen aufgeraut wird und/oder
- die Rückseite mit schwarzer Farbe, deren Brechungsindex dem des Objektes entspricht, lackiert wird
- alternativ das Glas im Immersion auf einen Absorber positioniert wird
- eine weitere Alternative ist eine lichtabsorbierende Immersion oder eine entsprechende Folie
- eine reflektierende Oberflächenbeschichtung oder -abdeckung kommt ebenfalls zum Einsatz

Die DE 199 44 354 A1 (Häusler) beschreibt ein Verfahren für die Bestimmung der Form und der Abbildungseigenschaften von spiegelnden oder transparenten Prüflingen. Es handelt sich dort um ein Verfahren zur deflektometrischen Vermessung einer Oberfläche des spiegelnden Messobjekts, es ist eine Kamera vorhanden, die Spiegelbilder der Beleuchtungseinrichtung aufnimmt und eine Auswerteeinheit, welche die Neigung der Oberfläche aus der Form der Spiegelbilder bestimmt. Auch werden dort linienförmige Strahlungsquellen verwendet, vgl. dortige Bezugszeichen 3, 3' und 3", Spalte 3, Zeilen 15 bis 26. Sie entstehen mithilfe eines Projektors, der ein Primärbild auf eine Streuscheibe projiziert, wobei das Primärbild ein Sinusgitter ist. Das auf der Mattscheibe entstehende Muster ist dort "Gitter" genannt. Ob es sich hierbei um linienförmige Strahlungsquellen handelt, vgl. dort Spalte 5, Zeilen 46 bis 58, ist nicht letztlich geklärt, jedenfalls aber finden sich dort keine anderen linienförmigen Strahlungsquellen, die nicht aus der Projektion eines Sinusgitters entstehen. Aus der JP 2005 134 362 A (Nippon Steel) ist jedenfalls eine Infrarot-Lichtquelle, dort 3, mit einer linearen Form offenbart, wobei eine Mehrzahl von linear sich erstreckenden Heizdrähten verwendet wird.

Die bekannten Verfahren weisen die folgenden technischen Schwierigkeiten auf.
a) Rückseitenreflex: Glasperlenstrahlen und Schwärzen von Linsen ist ein aufwendiger Vorgang, bei dem zudem die Linsen zerstört werden. Eine direkte in-line Überwachung der produzierten Linsen ist daher nicht möglich.
b) Kalibrierung durch Abweichung von der Ebene: Die angestrebte Messgenauigkeit der Systeme im Bereich von Bogensekunden setzt genaue Kalibrierverfahren voraus. Der Schirm wird als Ebene approximiert. Die verwendeten Schirme sind etwa 50 cm groß und nicht ideal eben (Fernseh- oder Monitordisplays, ausgedehnte Mattscheiben aus Kunststoff). Zumal unterliegen sie dem Einfluss der Schwerkraft, weil üblicherweise das Messobjekt horizontal in den Sensor eingelegt wird, und der Schirm oberhalb dessen waagrecht oder geneigt montiert ist. Die Tatsache, dass die reale Form solcher Schirme von einer Ebene abweicht führt zu systematischen Fehlern in den Messergebnissen. Die Abbildungsoptik eines Videoprojektors weist zudem im Allgemeinen Verzeichnung auf, so dass die projizierten Muster oder Linien leichte systematische Verbiegungen erhalten.
c) Kalibrierung durch verschiedene Medien: Bei Verwendung eines Fernseh- oder Monitordisplays als Schirm kommt hinzu, dass sich vor der (nicht perfekten) Ebene der Bilderzeugung eine Kunststoff- oder Glasplatte befindet. Es ist mit der üblicherweise bei photogrammetrischer Kalibrierung verwendeten Software nicht möglich, die Anwesenheit dieser vollständig Platte zu berücksichtigen. Dadurch entstehen ebenfalls systematische Fehler.
d) Stabilität der Mechanik: Fernseher oder Monitore haben üblicherweise Gehäuse aus Kunststoff. Gleiches gilt für Videoprojektoren. Die Befestigung über das Kunststoffgehäuse ist gerade auch über längere Zeiträume hinweg nicht mechanisch unbeweglich fest und führt zu Abweichungen vom kalibrierten Zustand und somit zu Messfehlern.
   Beim Videoprojektor kommt hinzu das optische System im Kunststoffgehäuse zu halten; es ist somit relativ zum Lichtmodulator nicht zuverlässig befestigt.
e) Temperatureinflüsse: Bei der Verwendung eines Fernsehers als Schirm wird sich dieser nach dem Einschalten erwärmen und ausdehnen. Bei Verwendung eines Videoprojektors wird sich der bilderzeugende Lichtmodulator im Videoprojektor nach dem Einschalten erwärmen und ausdehnen, ebenso wie die in der Nähe befindliche Abbildungsoptik. Die Kompensation dieser Effekte ist schwierig, weil zudem die Temperatur der umgebenden Luft - besonders unter Produktionsbedingungen - schwankt. Videoprojektoren regeln ihre Temperatur in einem geschlossenen Regelkreis, so dass die dem Regelungsprozess unterworfene Temperatur des Lichtmodulators erstens zeitabhängig schwankt und zweitens und von der Temperatur der umgebenden Luft abhängt. Dies führt zu zeit- und temperaturabhängigen Messfehlern.

Die Erfindung hat sich als Aufgabe gestellt, das Problem des Rückseitenreflexes zu lösen, ohne dass das Messobjekt präpariert werden muss. In einigen Ausführungsformen der Erfindung können auch die anderen genannten Schwierigkeiten umgangen werden.

Das für die Deflektometrie verwendete Licht wird erfindungsgemäß in einem Spektralbereich realisiert, in dem das Messobjekt nicht mehr transparent ist.

Natron-Kalk-Glas ist für Ultraviolettstrahlung unterhalb 350 nm undurchlässig. Glas der Sorte BK7 ist ab etwa 290 nm undurchlässig. Brillengläser aus Kunststoff enthalten UV-absorbierende Materialien und sind typenabhängig teilweise schon ab 400 nm nicht mehr transparent.

Im IR-Spekralbereich ist der bevorzugte Wellenlängenbereich durch die verfügbaren Kameras bestimmt. Die verbreitetsten bolometrischen Kameras arbeiten im Wellenlängenbereich von 4 µm bis 10 µm. In diesem Bereich sind die im sichtbaren transparenten Messobjekte aus Kunststoff und Glas undurchlässig.

Es soll darauf hingewiesen werden, dass in dieser Beschreibung auch im IR-Bereich von "Licht" oder einem 'Lichtbalken' gesprochen wird. Die Begriffe werden synonym zu "elektromagnetischer Strahlung im IR-Bereich' bzw. einem "linienförmigen Objekt zur Emission elektromagnetischer Strahlung im IR-Bereich" verwendet.

Im UV-Bereich ist "UV-Licht" im Sprachgebrauch ohnehin gebräuchlich.

In beiden Spektralbereichen gilt die Überlegung, dass das Eindringen der genutzten elektromagnetischen Strahlung in das Objekt bis zu einem gewissen Grad erlaubt sein kann: Der Anteil der genutzten Strahlung, der zu einem Rückseitenreflex führt, durchläuft die lokale Objektdicke zweimal. Auf diesem Weg muss er absorbiert werden. Also kann die Wellenlänge der Strahlung so gewählt werden, dass die Strahlung beim Durchlaufen der doppelten minimalen Objektdicke bis auf einen Rest abgeschwächt wird, der keinen wesentlichen Fehler erzeugt.

Als "genutzte elektromagnetische Strahlung" ist diejenige elektromagnetische Strahlung bezeichnet, die das System vollständig durchläuft. Im Allgemeinen emittiert die Lichtquelle ein umfassenderes Spektrum, dieses wird ggf. durch Filter vor der Lichtquelle eingeschränkt, dann deflektiert, dann ggf. von einem Filter vor der Kamera weiter eingeschränkt und fällt schließlich auf dem Kamerachip. Jeder Verfahrensschritt reduziert das Spektrum; die genutzte elektromagnetische Strahlung ist nur diejenige, die alle Elemente passieren kann und für die der Kamerachip empfindlich ist.

Der Infrarot-Bereich hat gegenüber dem UV-Bereich eine geringere optische Auflösung (infolge der erheblich größeren Wellenlänge, der üblicherweise geringeren Pixelzahl der Kameras) und birgt einen hohen Preis für die Kameras. Der IR-Bereich hat aber die Vorteile der einfachen Realisierung des Lichtbalkens und der Ungefährlichkeit der Strahlung für das menschliche Auge. Ein weiterer wichtiger Vorteil besteht darin bestehen, dass es Objekte, z. B. Bleche oder geschliffene optische Oberflächen gibt, die im sichtbaren Bereich optisch rau wirken, aber im Infrarotbereich spiegeln. Die Vermessung dieser Objekte mit deflektometrischen Verfahren wird also erst im Infrarot-Bereich möglich.

Eine Ausführungsform der Erfindung arbeitet mit UV-Licht knapp außerhalb des durchlässigen Spektralbereichs solcher Brillengläser mit solchen UV-absorbierenden Materialien und ist zur Vermessung eben dieser Brillengläser geeignet. Diese Ausführung hat technische Vorteile durch die Wahl der Wellenlänge: Solche UV-Strahlung ist leichter zu erzeugen und leichter mit Optik aus Glas abzubilden und zudem für den Menschen weniger gefährlich. Hautkrebsrisiko entsteht ab 320 nm.

Als geeigneter Spektralbereich wird erfindungsgemäß durch ein entsprechendes optisches Kantenfilter der Bereich von 330 nm bis 380 nm ausgewählt. Es werden 10 nm Abstand zu dem für Menschen gefährlichen Bereich und 20 nm Abstand zum nahezu vollständig transparenten Bereich der Brillengläser eingehalten. Dieser Abstand wird wegen der nicht senkrechten Kennlinien der optischen Kantenfilter benötigt. Man kann durch weitere Filter vor dem Kameraobjektiv erreichen, dass etwa noch ins Volumen eindringende Spektralanteile ausgefiltert werden.

Ein Kantenfilter zum Ausschluss des langwelligen (sichtbaren) Lichts kann in den Strahlengang eingebracht werden, vorzugsweise im Bereich des Kameraobjektivs. Dieses Sperrfilter soll gerade dort transmissiv werden, wo das Messobjekt undurchlässig wird, z. B. bei 380 nm. Das optische System soll parasitäre UV-Strahlung des Videoprojektors nutzen.

Zusätzlich kann ein UV-Sperrfilter im Videoprojektor entfernt werden oder die Farbfilter eines ggf. vorhandenen Filterrades entfernt werden oder durch einen Lampenwechsel ein Projektorlampentyp eingesetzt werden, bei der eine UV-absorbierende Beschichtung der Lampe fehlt. Wenn diese Zusatzmaßnahmen ergriffen werden, ist zum Schutz des Menschen das zweite Kantenfilter bei 330 nm notwendig. Andernfalls kann es weggelassen werden, weil die projektoreigenen Sperrfilter ohnehin kein UV-Licht mit einer Wellenlänge kürzer als 330 nm passieren lassen.

Die folgende Überlegung führt zu Ausführungsformen der Erfindung ohne Videoprojektor:

Wenn die erforderlichen Lichtstrukturen auf dem Schirm umschaltbar waagrechte oder senkrechte Streifen sind, so wird die volle Auflösung eines Fernsehers oder Monitors von ca. 1000 * 1000 = 1 Mio. Pixeln im Grunde nicht benötigt. Gäbe es ein Display mit 1000 senkrechten, streifenartigen Pixeln", denen sich in irgendeiner Weise 1000 waagrechte virtuelle "streifenartige Pixel" überlagern lassen, so ließe sich die Beleuchtungseinrichtung mit 2000 Pixeln anstelle von 1 Mio. Pixeln auf einem virtuellen Schirm realisieren.

Ausführungsbeispiele der Erfindung werden nachfolgend erläutert.
- **Abbildung 1**: Die Abbildung steht sinngemäß für die Figur. Hier ist ein erstes Beispiel gezeigt, bei dem eine Beobachtungseinrichtung mit einer Kamera 8 auf die spiegelnde Oberfläche des Messobjekts 7 gerichtet ist. Ein Spiegelbild einer ausgedehnten Beleuchtungseinrichtung 1 wird von der Kamera über die spiegelnde Oberfläche erfasst.
- **Abbildung 2**: zeigt eine Ausführungsform der Erfindung ohne Videoprojektor mit senkrechten und waagrechten "streifenartigen Pixeln".
- **Abbildung 3**: zeigt eine Ausführung zu den gedanklichen, streifenartigen Pixeln 9 aus Abbildung 2 mit dem dortigen Schirm 5.
- **Abbildung 4**: zeigt eine Ausführung, bei der vor die Lichtlinie ein optisches Element eingebracht worden ist, z. B. als umgedrehte, kreissegmentförmige Quartzglasscheibe 10.
- **Abbildung 5**: zeigt eine Geometrie mit zwei symmetrischen Dreiecken als Ausgangspunkt auf dem Lichtbalken, Reflexion an der Ober- bzw. Unterseite des Messobjekts 7 und Knotenpunkt der Kamera 8.
- **Abbildung 6**: zeigt eine Ausführungsform mit zwei um 90 ° gegeneinander gedreht montierten Linearverstellern 3 und zwei je darauf senkrecht montierten Lichtbalken, bei denen keine Drehbewegung erforderlich ist.

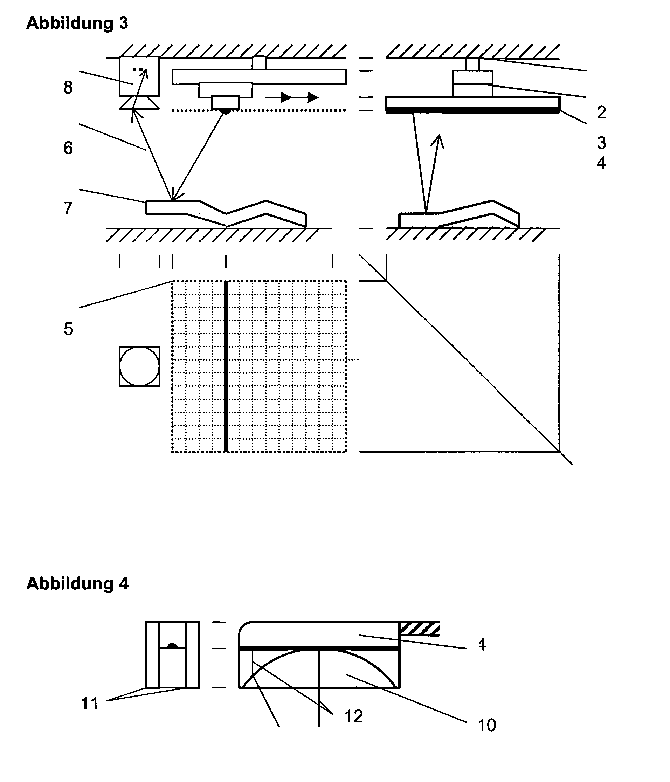

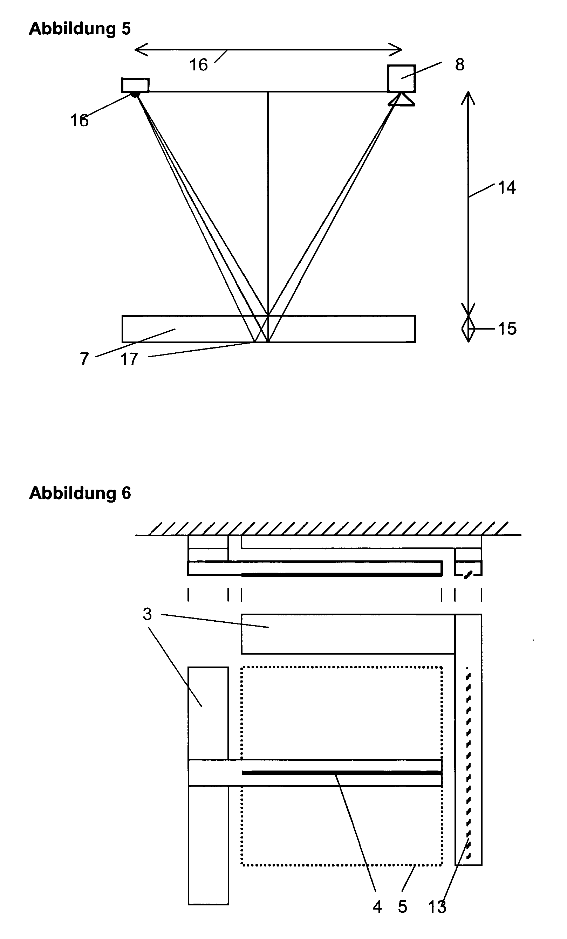

Funktionell sind die Abbildungen (Figuren) wie folgt zugeordnet. Abbildung 1 zeigt das Prinzip der Deflektometrie, Abbildung 2 einen virtuellen Schirm mit gedanklichen streifenartigen Pixeln, Abbildung 3 eine erste Ausführungsform der Erfindung in struktureller Gestalt, Abbildung 4 eine Überlegensfigur zum Abstand zwischen Kamera und virtuellem Schirm, Abbildung 5 eine Spaltblende und Abbildung 6 eine Ausführungsform mit zwei linearen Bewegungseinheiten.

Beleuchtungseinrichtungen nach Abbildung 3 werden in einer Ausführungsform der Erfindung wie folgt realisiert: Ein fahrbarer linienförmige Lichtbalken 4 wird schrittweise mit einem Linearversteller 3 senkrecht zu seiner Längsrichtung bewegt. Diese Bewegung erzeugt einen virtuellen Schirm 5. Dann wird die aus Linearversteller und Lichtbalken bestehende Anordnung mit einer Drehbewegungseinrichtung 2 in der Ebene des virtuellen Schirms um 90° gedreht und die Bewegung des Lichtbalkens um 90° gedreht wiederholt.

Die entsprechende Vorrichtung ist in Abbildung 3 in Vorder- und Seitenansicht dargestellt. Die Kamera 8 ist nur in einer Ansicht dargestellt.

In dieser Ausführungsart der Erfindung besteht die Beleuchtungseinheit also aus Drehbewegungseinrichtung 2, Linearachse 3 und Lichtbalken 4.

Eine solche Realisierung hat auf den ersten Blick einige Nachteile: Erstens muss auf die Verwendung von preiswerten Standardkomponenten verzichtet werden (Fernseher, Monitor, Videoprojektor). Zweitens verlängert sich die Datenaufnahmezeit, weil die codierte Beleuchtung (Streifenprojektion auf dem Schirm) durch ein sequentielles Verfahren ersetzt wird. Zudem wird zusätzlich Zeit für die mechanische Bewegung benötigt.

In Bezug auf die Datenaufnahmezeit wäre bei den beispielhaften Zahlen ein Dateneinzug von 2000 Kamerabildern nötig.

Bei einem Videosystem mit 60 Hz ergibt sich mit der Annahme, dass die Linearbewegung in diesem Takt möglich ist und der Annahme, dass die 90°-Drehung 5 sec benötigt eine Datenaufnahmezeit von etwa 38 sec. Brillengläser werden im Takt von ca. 5 min produziert, so dass der erfindungsgemäße Nachteil in Kauf genommen werden kann. Weiter unten wird gezeigt, wie man die Datenaufnahmezeit verringern kann.

Durch das Konzept des Lichtbalkens eröffnen sich jedoch Verfahren zur Lösung der unter "Kritik am Stand der Technik" dargestellten Schwierigkeiten, die erfindungsgemäß mit der Verwendung des Lichtbalkens kombiniert werden:

Wie bereits erwähnt wird das emittierte Licht des Lichtbalkens erfindungsgemäß vorteilhaft vorzugsweise in einem Spektralbereich realisiert, in dem das Messobjekt nicht mehr transparent ist. Die Vorteile der einfacheren und genaueren Kalibrierung bleiben jedoch auch erhalten, wenn der Lichtbalken mit Licht realisiert wird, für das das Objekt transparent ist.

In einer Ausführungsform wird ein linienförmiger faseroptischer Querschnittswandler verwendet. Das übliche Material für die Fasern ist Quarzglas, welches für UV-Licht (z. B. bei 290 nm, in einem für die Messobjekte aus Fensterglas undurchlässigen Spektralbereich) noch transparent ist. Das UV-Licht kann mit einem geeigneten ultravioletten Faserbeleuchtungssystem erzeugt werden. Kameraobjektive für UV sind verfügbar, ebenso Kameras, die UV-empfindlich sind. Solche UV-empfindlichen Kameras weisen ein Szintilatormaterial vor einem gewöhnlichen Silizium-Chip auf, sind also technisch den Kameras für sichtbares Licht ähnlich. Weitere optische Komponenten sind im System nicht vorhanden.

Beispielsweise kann man mit einem käuflichen Querschnittswandler ein rundes Faserbündel Durchmesser in eine flächengleiche Lichtlinie der Geometrie 500 mm * 1 mm umwandeln.

Damit die Apertur der Fasern ausreicht, sollten Mittelstrahlen 12 der einzelnen Glasfasern auf ein relativ kleines lokalisiertes Messobjekt gerichtet werden. Dazu kann vor die Lichtlinie ein optisches Element gebracht werden (Abbildung 4), z. B. eine umgedrehte kreissegmentförmige Quarzglasscheibe 10, gegen wobei gegen deren Seitenflächen rechteckige Spiegel 11 gedrückt werden können, die einen Lichttunnel bilden.

Im Gegensatz zum erfindungsgemäßen Vorgehen sind Monitore mit UV-Bild nicht verfügbar. Der Bau eines UV-Videoprojektors ist sehr aufwendig; UV-Videoprojektoren sind heute nicht wirtschaftlich verfügbar. Der erfindungsgemäße Weg über den Lichtbalken jedoch eröffnet die Möglichkeit eines Deflektometers im UV-Bereich.

Mit einem Lichtbalken kann man das Problem des Rückseitenreflexes aber auch dann lösen, wenn die Wellenlänge des Lichtes dennoch in das zu vermessende Objekt eindringt und an der Rückseite reflektiert wird. Es werden dann zwei Linien beobachtet, die aber unter bestimmten Voraussetzungen mit geeigneten Auswertealgorithmen getrennt werden können. Nach der Trennung wird für jede Linie der Ort des Maximums bestimmt, aus dem sich wiederum mit den dem Stand der Technik entsprechenden Verfahren in einer geeigneten Rechen- und Auswerteeinheit die Form der Objektvorderseite und Rückseite berechnen lässt.

Zur Trennung von Vorder- und Rückseitenreflex wird bei näherungsweise ebenen Objekten eine Vorschrift angegeben:

In einer Geometrie mit zwei symmetrischen Dreiecken (Abbildung 5) bestehend aus Ausgangspunkt auf dem Lichtbalken 4, Reflexion an der Ober- bzw. Unterseite des Messobjektes 7 und Knotenpunkt der Kamera 8 besteht ein Objektwinkelunterschied zwischen den beiden beobachteten Reflexionen von α=arctan (2A/B) - arctan (2A/(B+D/n)).

Dabei ist mit B := Länge der Dreiecksbasis 16, A:= Abstand zwischen Dreiecksbasis und Oberfläche des Messobjekts 14, D:= Dicke des Messobjektes, n:= Brechungsindex des Messobjektes, D/n = scheinbare Dicke des Messobjektes 15.

Nach den Gesetzen der Reflexion ruft eine Abweichung von der Waagrechten einer der deflektierenden Flächen eine Änderung um den doppelten Winkel beim deflektierten Strahl hervor.

Somit kann die Oberseite oder Unterseite eine Abweichung von der Waagrechten von weniger als α/2 aufweisen, damit die Strahlen erst im Grenzfall eines Punktes mit Neigungsabweichung von α/2 aus der Waagrechten 17 zusammenfallen und nicht mehr trennbar sind. Man kann die zulässige Abweichung von der Waagrechten erhöhen, indem der Abstand B entsprechend erhöht wird.

### Verbesserungen zu den Schwierigkeiten bei der Kalibrierung und Stabilität".

Die Planität des virtuell im Laufe der Bewegung durch den Lichtbalken repräsentierten "virtuellen Schirmes" 5 kann mit hoher Präzision gewährleistet werden. Der Lichtaustritt eines faseroptischen Querschnittswandlers wird durch gemeinsames Polieren der Faserenden auf der Austrittsseite gefertigt. Eine durch eine Maschine polierte Glasfläche weist eine gute Ebenheit auf.

Ebenso ist ein gespannter Heizdraht sehr gerade, wenn die Zugkraft im Vergleich zum Gewicht des Drahtes und zu möglichen Federkräften im Material hoch ist. Die Zugkraft muss auch bei der infolge Erwärmung erfolgenden Temperaturausdehnung des Drahtes erhalten bleiben, dies kann man mit einer Spannfeder realisieren.

Die Anordnung soll nach erfolgter Drehung um 90° die Ebene des virtuellen Schirms nicht verlassen. Dazu ist zu gewährleisten, dass die Drehachse der 90°-Drehung einerseits senkrecht zur Verschieberichtung und andererseits senkrecht zur Längsrichtung des Lichtbalkens steht. Dies kann entweder durch eine stabile oder vorjustierte Mechanik realisiert werden oder durch eine mechanische Justage, die nach messtechnischer Kontrolle der mechanischen Verschiebung und Drehung durch mechanische Justage gewährleistet werden. Auch eine algorithmische Kompensation der Bewegungsabweichungen ist über die bestehenden Kalibrieralgorithmen möglich.

Eine zusätzlich störende Glasscheibe vor dem Lichtaustritt, wie bei einem Flachbild-Display oder Monitor, ist in den Beispielen nicht vorhanden.

### Verbesserungen zu "Temperatureinflüssen".

Ein in der Praxis wesentlicher Vorteil ist die Tatsache, dass die Maßstabsverkörperung in der beschriebenen Ausführung der Erfindung durch einen Linearversteller gewährleistet wird. Es gibt Linearversteller, die ihre Aufgabe, einen metrischen Sollwert anzufahren, mit höchster Präzision erfüllen (z. B. durch integrierte Glasmaßstäbe). Die Präzision kann auch bei unterschiedlichen Temperaturen erreicht werden, da eine Temperaturkompensation in diesen Systemen integriert sein kann.

Eine solche Präzision in den Ortskoordinaten fehlt hingegen bei projizierten Videobildern, aus den beschriebenen Gründen.

### Weitere Verbesserungen

Durch die Verwendung von Linearverstellern entfällt die Auflösungsgrenze, die die Pixel eines Videoprojektors, Fernsehers oder Monitors darstellen. Dadurch wird die deflektometrische Vermessung großer Objekte mit hohem Detailgrad möglich.

Weiterhin erlaubt das Verfahren die Platzierung der Kameras hinter dem virtuellen Schirm, wenn der Nachteil in Kauf genommen wird, dass zeitweise solche Kameras, die zu dieser Zeit von dem Lichtbalken verdeckt werden keine nutzbare Information liefern. Bei der entstehenden Geometrie können virtueller Schirm und Messobjekt parallel liegen. Dadurch entsteht ein sehr symmetrischer Aufbau der die Erfassung stärker geneigter Bereiche der Oberfläche des Messobjekts gestattet.

### Weitere Ausführungen

Die linienförmige Lichtquelle kann im UV-Bereich auch realisiert werden, indem eine langgezogene linienförmige Gasentladungslampe, die UV-Licht emittiert, verwendet wird. Dazu können Spektrallampen, die wegen der Geometrie von optischen Spektrometern ohnehin linienförmig gebaut sind, verwendet werden. Entsprechende Produkte gibt es z. B. zur Emission des Wasserstoffspektrums, mit entsprechendem UV-Anteil.

Auch breitere aber dennoch linienförmige Gasentladungslampen mit UV-Licht sind verfügbar. Es gibt stabförmige UV-Gasentladungslampen z. B. im medizinischen Bereich zur Desinfektion oder zur Therapie von Hautkrankheiten. Wenn die Lampen breiter sind als erwünscht, werden sie nach einer weiteren Ausführungsform der Erfindung mit einer spaltförmigen Blende versehen.

Eine andere mechanisch vorteilhafte Ausführung der Erfindung besteht darin, dass anstelle des Lichtbalkens das Messobjekt gemeinsam mit den Kameras bewegt wird, während der Lichtbalken ruht. Dies ist möglich, weil für das Verfahren nur die Relativbewegung des Lichtbalkens zum Messobjekt entscheidend ist, weil das Messobjekt Linien in zwei Azimuten deflektieren muss.

Im Infrarot-Bereich kann die linienhafte Emission ohne Verwendung von Temperaturunterschieden auch allein durch verschiedenen Emissionskoeffizienten des Materials realisiert werden. Eine (im Infraroten) schwarze Linie auf einer (im Infraroten) spiegelnden Fläche (z. B. Aluminiumblech) ist ausreichend.

Ein Erhitzen beider Flächen ist vorteilhaft, weil Erhitzen gemäß dem Planck'schen Gesetz die Emission beider Flächen stark erhöht, so dass auch der absolute Unterschied der Strahlungsemission der beiden Flächentypen anwächst.

Durch die folgenden Überlegungen kann das Verfahren beschleunigt werden und teilweise die Präzision weiter gesteigert werden.

Abbildung 6 zeigt die Verwendung von zwei um 90° gegeneinander gedreht montierten Linearverstellern 3 und zwei je darauf senkrecht montierten Lichtbalken entfällt die Drehbewegungseinrichtung und der Zeitbedarf für die Drehung. Die Lichtbalken werden nacheinander durch den virtuellen Schirm 5 gefahren. Es kann gewährleistet werden, dass sich beide Lichtbalken in derselben virtuellen Ebene bewegen, indem die Parkposition des nicht aktiven Lichtbalkens 13 außerhalb des Bewegungsbereichs des aktiven Lichtbalkens 4 ist. So wird eine Kollision vermieden.

Der Wegfall einer Drehachse führt zu zwei baugleichen einfacheren Systemen. Da die Linearachsen 3 direkt auf einer Verankerungsplatte montiert werden können, entfallen mechanische Fehler durch aufeinander sitzende Verstelleinheiten.

Anstelle eines Linienlichts können zur Beschleunigung des Verfahrens mehrere Linienlichter montiert werden. Der Abstand zwischen den Linienlichtern muss so bemessen sein, dass die Auswertesoftware diese trennen kann. Die Zahl der Lichtbalken kann umso höher sein, je mehr A-priori-Information über das Messobjekt besteht, z. B. wird bei Inspektion der Ebenheit von Flachglas eine räumliche Trennung einer hohen Zahl von Linienlichtern möglich sein.

Wenn wir gedanklich zur ursprünglichen Ausführungsform des Systems mit Dreh- und Linearachse zurückgehen, so kann auch die Linearachse bei weiterhin bestehender Drehbewegungseinrichtung entfallen. Dann müssen eine hohe Zahl von Lichtbalken parallel nebeneinander montiert werden, von denen zu einem Zeitpunkt nur einer leuchtend geschaltet bzw. erhitzt wird. Die Anzahl richtet sich nach der gewünschten Auflösung, 1000 im Beispiel. Die Umschaltung ist zwischen allen Lichtbalken durchzuführen. Die noch vorhandene Drehbewegungseinrichtung kann danach die 90°-Drehung gewährleisten.

Diese Ausführung ist bei Verwendung von z. B. 1000 parallel gespannten Drahten von der Kostenseite nicht sehr aufwendig. Auch eine entsprechende Ansteuerschaltung ist einfach zu realisieren.

Neben einer parallelen Realisierung mit gespannten Drähten ist auch die Anfertigung einer Platine denkbar, die (im Beispiel) 1000 parallele Leiterbahnen aufweist. Eine solche Platine hat Abmessungen im Bereich 50 cm * 50 cm und im Beispiel 1000 Leiterbahnen, somit 0,5 mm Abstand der Leiterbahnen bei z. B. 35 µm Kupferschicht.

Die parallelen Realisierungen ermöglichen wieder eine codierte Beleuchtung im Beleuchtungssystem zur weiteren Zeitersparnis. So lässt sich mit den parallel gespannten Drähten oder mit der beschriebenen Platine das Phasenshiftverfahren realisieren. Dazu muss eine örtlich sinusförmige Temperaturverteilung auf der Platine oder in der Ebene der parallel gespannten Drähte erzeugt werden. Dies geschieht durch geeignete sinusförmige Ansteuerung der Drähte oder Leiterbahnen. Die dazu notwendige Erzeugung kontinuierlicher Temperaturwerte kann durch regelbare Stromstärken in den Drähten bzw. Leiterbahnen erfolgen oder durch eine Impulsbreitenmodulation einer bestimmten Stromstärke im Draht oder der Leiterbahn.

Schließlich lassen sich parallel gespannte Drähte auch 90° über Kreuz realisieren. Somit entfällt jede mechanische Achse und es entfällt die entsprechende Zeitdauer, die zu deren Bewegung benötigt wird. Damit wird eine Ausführung wie in Abbildung 2 dargestellt direkt möglich. Die Drähte müssen gegeneinander isoliert werden, z. B. durch Verwendung von Kupferlackdraht und nicht-überschreiten der Schmelztemperatur des Lackes. Eine Ansteuerung ist einzeln oder nach dem Phasenshiftverfahren möglich. Die gekreuzten Drähte können sich nicht genau in einer Ebene befinden, wodurch Messfehler entstehen werden. Diesen Nachteil kann man aber durch aufgedampfte Leiterbahnen mit sehr dünner Isolierschicht vermeiden.

### Legende zu den Abbildungen (Figuren)

Beleuchtungseinrichtung 1
Drehbewegungseinrichtung 2
Linearachse 3
Lichtbalken 4
Virtueller Schirm 5
deflektierter Strahl 6
Messobjekt 7
Kamera 8
gedanklicher streifenartiger Pixel 9
kreissegment-förmige Quarzglasscheibe 10
rechteckiger Spiegel 11
Mittelstrahlen von Glasfasern 12
inaktiver Lichtbalken 13
Abstand zwischen Dreiecksbasis und Oberfläche des Messobjekts 14
die um die Bildhebung korrigierte Dicke des Messobjektes 15
Länge der Dreiecksbasis 16
Punkt mit Neigungsabweichung von α/2 aus der Waagrechten 17

### Referenzen

[3DS06] Produktblatt "Optischer Sensor zur Vermessung spiegelnder Oberflächen", 3D-Shape GmbH, Henkestraße 91, 91052 Erlangen, 2006
[Häusler 99] G. Häusler, "Verfahren und Vorrichtung zur Ermittlung der Form oder der Abbildungseigenschaften von spiegelnden oder transparenten Objekten", Patent DE 199 44 354 A1, 1999
[Kammel03] S. Kammel, "Deflectometry for quality control of specular surfaces", Technisches Messen tm 70, pp. 193-8, 2003
[Knauer04] M. Knauer, G. Häusler, R. Lampalzer, "Verfahren und Vorrichtung zur Bestimmung der Form und der lokalen Oberflächennormalen spiegelnder Oberflächen", Patent DE 10 2004 020 419
[Pérard97] D. Pérard und J. Beyerer, "Three-dimensional measurement of specular free-form surfaces with a structured lighting reflection technique", Three-Dimensional Imaging and Laserbased Systems for Metrology and Inspection III, Proc. SPIE 3204, pp. 74-80, 1997
[Petz03] M. Petz und R. Tutsch, "Measurement of optically effective surfaces by imaging of gratings", Optical Measurement Systems for Industrial Inspection II, Munich, Germany, Proc. SPIE 5144, pp. 288-94, 2003
[Ritter83] R. Ritter und R. Hahn, "Contribution to analysis of the reflection grating method", Optics and Lasers in Engineering 4(1), pp. 13-24, 1983

## Patentansprüche

1. Verfahren zur Vermessung einer Oberfläche eines Messobjektes (7) nach dem Prinzip der Deflektometrie,
bei dem eine Beobachtungseinrichtung Spiegelbilder einer Beleuchtungseinrichtung, die elektromagnetische Strahlung aussendet, aufnimmt,
bei dem diese Spiegelbilder durch Spiegelung der Beleuchtungseinrichtung an der Oberfläche des Messobjekts (7) entstehen,
und bei dem aus der Form der Spiegelbilder die Neigung der Oberfläche des Messobjektes (7) bestimmt wird,
wobei die Beleuchtungseinrichtung eine oder mehrere linienförmige Quellen für elektromagnetische Strahlung (4) aufweist und das Spektrum der elektromagnetischen Strahlung so gewählt wird, dass die Strahlung im Volumen des Messobjekts mindestens zum Teil absorbiert wird und an der Oberfläche mindestens zum Teil reflektiert wird;
die Beobachtungseinrichtung mit einer oder mehreren Kameras (8), die für die elektromagnetische Strahlung empfindlich sind, eine Serie von Spiegelbildern mit jeweils verschobener, gedrehter oder der Helligkeit variierter Beleuchtungseinrichtung aufzeichnet, wobei die linienförmige Quelle für elektromagnetische Strahlung (4) realisiert wird durch
- einen optischen Querschnittswandler, in den mit einer Beleuchtung UV-Strahlung eingekoppelt wird; oder
- eine stabförmige Gasentladungslampe für die Aussendung von ultravioletter Strahlung; oder
- parallel gespannte erwärmte Drähte zur Emission von Infrarotstrahlung, die in hoher Zahl und 90° über Kreuz gespannt vorgesehen sind; oder
- mehrere einzeln oder in Gruppen beheizbare Leiterbahnen auf einer Platine; oder
- mehrere auf einem Hintergrund aufgebrachte Linien, wobei die Linien und der Hintergrund die gleiche Temperatur haben und die höhere Emission der Linien gegenüber dem Hintergrund durch den höheren Emissionskoeffizienten der Oberfläche der Linien realisiert wird.

2. Verfahren nach Anspruch 1, wobei der Abstand zwischen der zumindest einen Kamera (8) und Beleuchtungseinrichtung so gewählt wird, dass die Bilder von der Vorder- und Rückseite des Messobjektes weitgehend trennbar nebeneinander liegen und getrennt für die Vorder- und Rückseite ausgewertet werden.

3. Verfahren nach Anspruch 1, wobei die linienförmigen Quellen für die elektromagnetische Strahlung (4) mit einer oder mehreren Bewegungseinrichtungen (3), vorzugsweise senkrecht zur Linienrichtung verschoben werden und dabei die Spiegelbilder gespeichert werden.

4. Verfahren nach Anspruch 1, wobei die linienförmigen Quellen für die elektromagnetische Strahlung (4) und das Messobjekt (7) mit einer Drehbewegungseinrichtung (2), vorzugsweise um 90° relativ zueinander gedreht werden.

5. Verfahren nach Anspruch 1, wobei das Spektrum der elektromagnetischen Strahlung so gewählt wird, dass mindestens ein Teil des Spektrums im Volumen des Messobjektes absorbiert und an der Oberfläche reflektiert wird, und wobei die zumindest eine Kamera (8) für die elektromagnetische Strahlung empfindlich ist, die im Volumen absorbiert und an der Oberfläche reflektiert wird und durch ihre Bauart oder durch zusätzlich vorgesehene Filter unempfindlich gegen den Teil des Spektrums sind, der aus dem Volumen in die Kamera gelangt.

6. Verfahren nach Anspruch 5, wobei der Wellenlängenbereich der genutzten elektromagnetischen Strahlung mit Hilfe eines Sperrfilters so eingeschränkt wird, dass ein Wellenlängenbereich von 330 nm bis 380 nm verbleibt.

7. **Vorrichtung** zur Vermessung einer Oberfläche eines Messobjektes (7) nach dem Prinzip der Deflektometrie, die Vorrichtung mit einer Beleuchtungseinrichtung, die elektromagnetische Strahlung aussendet, einer Beobachtungseinrichtung, die Spiegelbilder der Beleuchtungseinrichtung aufnehmen kann, welche durch Spiegelung an der Oberfläche des Messobjekts (7) entstehen;
und mit einer Rechen- und Auswerteeinheit, um aus der Form des Spiegelbildes an dem bekannten Ort der Beleuchtungseinrichtung die Neigung der Oberfläche des Messobjektes (7) zu bestimmen,
- wobei die Beleuchtungseinrichtung eine oder mehrere linienförmige Quellen für elektromagnetische Strahlung (4) aufweist und die Wellenlänge der genutzten elektromagnetischen Strahlung in einem Wellenlängenbereich zwischen 330 nm und 380 nm oder zwischen 4 µm bis 10 µm liegt;
- die Beobachtungseinrichtung eine oder mehrere Kameras (8) aufweist, die für die elektromagnetische Strahlung empfindlich sind, um eine Serie von Spiegelbildern mit jeweils verschobener, gedrehter oder in der Helligkeit variierter Beleuchtung aufzuzeichnen, wobei eine oder mehrere linienförmige Quellen für elektromagnetische Strahlung (4) realisiert sind durch
- einen optischen Querschnittswandler, in den mit einer Beleuchtung UV-Strahlung einkoppelbar ist;
- eine stabförmige Gasentladungslampe für die Aussendung von ultravioletter Strahlung;
- parallel gespannte erwärmte Drähte zur Emission von Infrarotstrahlung, die in hoher Zahl und 90° über Kreuz gespannt vorgesehen sind;
- mehrere einzeln oder in Gruppen beheizbare Leiterbahnen auf einer Platine; oder
- mehrere auf einem Hintergrund aufgebrachte Linien, wobei die Linien und der Hintergrund die gleiche Temperatur haben und die höhere Emission der Linien gegenüber dem Hintergrund durch den höheren Emissionskoeffizienten der Oberfläche der Linien realisiert sind.

8. Vorrichtung nach Anspruch 7, wobei eine oder mehrere Bewegungseinrichtungen (3) vorgesehen sind, die ausgebildet sind, die linienförmigen Quellen für die elektromagnetische Strahlung (4) vorzugsweise senkrecht zur Linienrichtung zu verschieben, und wobei die Beobachtungseinrichtung ausgebildet ist, dabei die Spiegelbilder zu speichern.

9. Vorrichtung nach Anspruch 7, wobei eine Drehbewegungseinrichtung (2) vorgesehen und ausgebildet ist, die linienförmigen Quellen für die elektromagnetische Strahlung (4) und das Messobjekt (7) vorzugsweise um 90° relativ zueinander zu drehen.

10. Vorrichtung nach Anspruch 7, wobei das Spektrum der elektromagnetischen Strahlung so gewählt ist, dass mindestens ein Teil des Spektrums im Volumen des Messobjektes absorbiert und an der Oberfläche reflektiert wird, und wobei die eine oder die mehreren Kameras (8) für die elektromagnetische Strahlung empfindlich sind, die im Volumen absorbiert und an der Oberfläche reflektiert wird und durch ihre Bauart oder durch zusätzlich vorgesehene Filter unempfindlich gegen den Teil des Spektrums sind, der aus dem Volumen in die eine oder die mehreren Kameras gelangt.

11. Vorrichtung nach Anspruch 10, wobei mit Hilfe eines Sperrfilters der Wellenlängenbereich so eingeschränkt wird, dass Wellenlängen zwischen 330nm bis 380 nm verbleiben.

12. Vorrichtung nach Anspruch 7, wobei die Beleuchtungseinrichtung mehrere linienförmige Quellen für elektromagnetische Strahlung aufweist, die zeitlich sequentiell einzeln oder in Gruppen ansteuerbar sind.

13. Vorrichtung nach Anspruch 7, wobei die Beleuchtungseinrichtung einen Videoprojektor und einen Schirm aufweist und der Videoprojektor modifiziert ist, indem ein UV-Sperrfilter entfernt oder eine Projektorlampe mit UV-absorbierender Beschichtung durch einen Lampentyp ausgetauscht ist, der die Beschichtung nicht aufweist.

## Claims

1. **Method for measuring** a surface of a measuring object (7) according to the principle of deflectometry,
wherein an observation device acquires mirror images of an illumination device emitting electromagnetic radiation,
wherein said mirror images are created by mirroring of the illumination device at the surface of the measuring object (7),
and wherein the slope of the surface of the measuring object (7) is determined from the shape of the mirror images,
wherein the illumination device includes one or more linear sources of electromagnetic radiation (4) and the spectrum of the electromagnetic radiation is chosen such that the radiation is absorbed, at least in part, in the volume of the measuring object and is reflected, at least in part, at the surface;
wherein the observation device, by means of one or more cameras (8) sensitive to electromagnetic radiation, records a series of mirror images using the illumination device which is displaced, rotated or varied in brightness respectively, wherein the linear source of electromagnetic radiation (4) is realized by:
- an optical sectional transformer, into which UV radiation is coupled by means of illumination, or
- a bar-shaped electric discharge lamp for emitting ultraviolet radiation, or
- heated wires tensioned in parallel for emitting infrared radiation, which are provided in large numbers and crossing at 90°, or
- a plurality of conductive paths on a circuit board, which can be heated individually or in groups, or
- a plurality of lines applied to a background, wherein the lines and the background have the same temperature, and wherein the higher emission of the lines as compared to the background is realized by the higher coefficient of emission of the surface of the lines.

2. Method according to claim 1, wherein the distance between the at least one camera (8) and the illumination device is chosen such that the images of the front and rear sides of the measuring object are juxtaposed in a substantially separable manner and are evaluated separately for the front and rear sides.

3. Method according to claim 1, wherein the linear sources of electromagnetic radiation (4) are displaced, preferably perpendicular to the direction of the lines, by means of one or more movement devices (3) and the mirror images are stored at the same time.

4. Method according to claim 1, wherein the linear sources of electromagnetic radiation (4) and the measuring object (7) are rotated relative to each other, preferably by 90°, by means of a rotational movement device (2).

5. Method according to claim 1, wherein the spectrum of the electromagnetic radiation is chosen such that at least a part of the spectrum is absorbed in the volume of the measuring object and is reflected at the surface, and wherein the at least one camera (8) is sensitive to the electromagnetic radiation absorbed in the volume and reflected at the surface and, due to its design or by use of additional filters, is insensitive to the part of the spectrum exiting the volume and entering the camera.

6. Method according to claim 5, wherein the wavelength range of the utilized electromagnetic radiation is limited by means of a blocking filter such that a wavelength range of 330 nm to 380 nm remains.

7. **Apparatus** for measuring a surface of a measuring object (7) according to the principle of deflectometry, said apparatus comprising an illumination device emitting electromagnetic radiation, an observation device capable of acquiring mirror images of the illumination device, which are created by mirroring at the surface of the measuring object (7),
and a calculation and evaluation device for determining the slope of the surface of the measuring object (7) from the shape of the mirror image at the known position of the illumination device,
- wherein the illumination device includes one or more linear sources of electromagnetic radiation (4), and wherein the wavelength of the utilized electromagnetic radiation is within a wavelength range between 330 nm and 380 nm or between 4 µm and 10 µm;
- wherein the observation device includes one or more cameras (8) sensitive to electromagnetic radiation for recording a series of mirror images using illumination which is displaced, rotated or varied in brightness respectively, wherein one or more linear sources of electromagnetic radiation (4) are realized by:
- an optical sectional transformer, into which UV radiation can be coupled by means of illumination,
- a bar-shaped electric discharge lamp for emitting ultraviolet radiation,
- heated wires tensioned in parallel for emitting infrared radiation, which are provided in large numbers and crossing at 90°,
- a plurality of conductive paths on a circuit board, which can be heated individually or in groups, or
- a plurality of lines applied to a background, wherein the lines and the background have the same temperature, and wherein the higher emission of the lines as compared to the background is realized by the higher coefficient of emission of the surface of the lines.

8. Apparatus according to claim 7, wherein one or more movement devices (3) are provided, which are adapted to displace the linear sources of electromagnetic radiation (4), preferably perpendicular to the direction of the lines, and wherein the observation device is adapted to store the mirror images at the same time.

9. Apparatus according to claim 7, wherein a rotational movement device (2) is provided and adapted to rotate the linear sources of electromagnetic radiation (4) and the measuring object (7) relative to each other, preferably by 90°.

10. Apparatus according to claim 7, wherein the spectrum of the electromagnetic radiation is chosen such that at least a part of the spectrum is absorbed in the volume of the measuring object and is reflected at the surface, and wherein the one or more cameras (8) are sensitive to the electromagnetic radiation absorbed in the volume and reflected at the surface and, due to their design or by use of additional filters, are insensitive to the part of the spectrum exiting the volume and entering the one or more cameras.

11. Apparatus according to claim 10, wherein the wavelength range is limited by means of a blocking filter such that wavelengths between 330 nm and 380 nm remain.

12. Apparatus according to claim 7, wherein the illumination device comprises a plurality of linear sources of electromagnetic radiation which can be controlled sequentially individually or in groups with respect to time.

13. Apparatus according to claim 7, wherein the illumination device comprises a video projector and a screen, and wherein the video projector is modified by removing a UV blocking filter or replacing a projector lamp with a UV-absorbing coating by a lamp type not including the coating.

## Revendications

1. **Procédé de mesure** d'une surface d'un objet (7) à mesurer selon le principe de la déflectométrie, dans lequel
un système d'observation prend des images miroirs d'un système d'éclairage qui émet un rayonnement électromagnétique,
ces images miroirs résultent de la réflexion du système d'éclairage sur la surface de l'objet (7) à mesurer,
et on détermine l'inclinaison de la surface de l'objet (7) à mesurer à partir de la forme des images miroirs,
le système d'éclairage comprenant une ou plusieurs sources de forme linéaire pour le rayonnement électromagnétique (4), et le spectre du rayonnement électromagnétique étant choisi de telle sorte que le rayonnement est au moins partiellement absorbé dans le volume de l'objet à mesurer et au moins partiellement réfléchi sur la surface ;
le système d'observation enregistre au moyen d'une ou de plusieurs caméras (8) sensibles vis-à-vis du rayonnement électromagnétique une série d'images miroirs avec un système d'éclairage respectivement décalé, tourné ou de luminosité variée,
la source de forme linéaire pour le rayonnement électromagnétique (4) étant réalisée par
- un convertisseur de section optique dans lequel un rayonnement ultraviolet est couplé par un éclairage; ou
- une lampe à décharge de gaz en forme de barreau pour émettre un rayonnement ultraviolet ; ou
- des fils chauffés tendus parallèlement pour émettre un rayonnement infrarouge, qui sont prévus en nombre élevé et disposés tendus en croix sur 90° ; ou
- plusieurs pistes conductrices sur une platine, qui sont susceptibles d'être chauffées individuellement ou par groupes ; ou
- plusieurs lignes déposées sur un arrière-plan, les lignes et l'arrière-plan ayant la même température et l'émission accrue des lignes par rapport à l'arrière-plan étant réalisée par le coefficient d'émission accru de la surface des lignes.

2. Procédé selon la revendication 1, dans lequel la distance entre ladite au moins une caméra (8) et le système d'éclairage est choisie de telle sorte que les images du côté avant et du côté arrière de l'objet à mesurer sont juxtaposées de façon largement séparable et sont évaluées séparément pour le côté avant et pour le côté arrière.

3. Procédé selon la revendication 1, dans lequel les sources de forme linéaire pour le rayonnement électromagnétique (4) sont décalées au moyen d'un ou de plusieurs systèmes de déplacement (3), de préférence perpendiculairement à la direction des lignes, en mémorisant les images miroirs.

4. Procédé selon la revendication 1, dans lequel les sources de forme linéaire pour le rayonnement électromagnétique (4) et l'objet (7) à mesurer sont tournés l'un par rapport à l'autre, de préférence de 90°, au moyen d'un système de mouvement de rotation (2).

5. Procédé selon la revendication 1, dans lequel le spectre du rayonnement électromagnétique est choisi de telle sorte qu'une partie au moins du spectre est absorbée dans le volume de l'objet à mesurer et réfléchie sur la surface, et ladite au moins une caméra (8) est sensible vis-à-vis du rayonnement électromagnétique qui est absorbé dans le volume et réfléchi sur la surface et est insensible vis-à-vis de la partie du spectre allant du volume jusque dans la caméra, grâce à son type de construction ou par des filtres prévus en supplément.

6. Procédé selon la revendication 5, dans lequel la plage de longueur d'onde du rayonnement électromagnétique utilisé est restreinte au moyen d'un filtre de blocage, de telle sorte qu'il reste une plage de longueur d'onde de 330 nm à 380 nm.

7. **Dispositif** de mesure d'une surface d'un objet (7) à mesurer selon le principe de la déflectométrie, le dispositif comprenant un système d'éclairage qui émet un rayonnement électromagnétique, un système d'observation capable de prendre des images miroirs du système d'éclairage qui résultent de la réflexion sur la surface de l'objet (7) à mesurer,
et comprenant une unité de calcul et d'évaluation pour déterminer l'inclinaison de la surface de l'objet (7) à mesurer à partir de la forme de l'image miroir à l'emplacement connu du système d'éclairage,
- le système d'éclairage comprenant une ou plusieurs sources de forme linéaire pour le rayonnement électromagnétique (4), et la longueur d'onde du rayonnement électromagnétique utilisé se situe dans une plage de longueur d'onde comprise entre 330 nm et 380 nm ou entre 4 µm et 10 µm ;
- le système d'observation comprenant une ou plusieurs caméras (8) sensibles vis-à-vis du rayonnement électromagnétique pour enregistrer une série d'images miroirs respectivement avec un éclairage décalé, tourné ou de luminosité variée, une ou plusieurs sources de forme linéaire pour le rayonnement électromagnétique (4) étant réalisée(s) par
- un convertisseur de section optique dans lequel un rayonnement ultraviolet est couplé par un éclairage;
- une lampe à décharge de gaz en forme de barreau pour émettre un rayonnement ultraviolet; ou
- des fils chauffés tendus parallèlement pour émettre un rayonnement infrarouge, qui sont prévus en nombre élevé et disposés tendus en croix sur 90°;
- plusieurs pistes conductrices sur une platine qui sont susceptibles d'être chauffées individuellement ou par groupes ; ou
- plusieurs lignes déposées sur un arrière-plan, les lignes et l'arrière-plan ayant la même température et l'émission accrue des lignes par rapport à l'arrière-plan étant réalisée par le coefficient d'émission accru de la surface des lignes.

8. Dispositif selon la revendication 7, dans lequel il est prévu un ou plusieurs systèmes de déplacement (3) qui sont réalisés pour décaler les sources de forme linéaire pour le rayonnement électromagnétique (4) de préférence perpendiculairement à la direction des lignes, le système d'observation étant réalisé pour mémoriser les images miroirs.

9. Dispositif selon la revendication 7, dans lequel il est prévu un système de mouvement de rotation (2) réalisé pour faire tourner les sources de forme linéaire pour le rayonnement électromagnétique (4) et l'objet (7) à mesurer l'un par rapport à l'autre, de préférence de 90°.

10. Dispositif selon la revendication 7, dans lequel le spectre du rayonnement électromagnétique est choisi de telle sorte qu'une partie au moins du spectre est absorbée dans le volume de l'objet à mesurer et réfléchie sur la surface, et ladite au moins une ou lesdites plusieurs caméras (8) sont sensibles vis-à-vis du rayonnement électromagnétique qui est absorbé dans le volume et réfléchi sur la surface et sont insensibles vis-à-vis de la partie du spectre allant du volume jusque dans ladite une ou lesdites plusieurs caméras, grâce à leur type de construction ou par des filtres prévus en supplément.

11. Dispositif selon la revendication 10, dans lequel la plage de longueur d'onde est restreinte au moyen d'un filtre de blocage, de telle sorte qu'il reste des longueurs d'onde comprises entre 330 nm et 380 nm.

12. Dispositif selon la revendication 7, dans lequel le système d'éclairage comprend plusieurs sources de forme linéaire pour le rayonnement électromagnétique, qui sont susceptibles d'être pilotées individuellement ou en groupes séquentiellement dans le temps.

13. Dispositif selon la revendication 7, dans lequel le système d'éclairage comprend un projecteur vidéo et un écran, le projecteur vidéo étant modifié par enlèvement d'un filtre de blocage des UV ou par remplacement d'une lampe de projecteur, pourvue d'un revêtement absorbant les UV, par un type de lampe dépourvu dudit revêtement.
